(19) **Europäisches Patentamt**

**European Patent Office**

**Office européen des brevets**

(11) Publication number : **0 522 815 A1**

(12) # EUROPEAN PATENT APPLICATION

(21) Application number : **92306191.5**

(22) Date of filing : **06.07.92**

(51) Int. Cl.$^5$ : **G01P 3/36,** G01S 17/58

(30) Priority : **12.07.91 GB 9115096**

(43) Date of publication of application :
**13.01.93 Bulletin 93/02**

(84) Designated Contracting States :
**DE ES FR GB IT**

(71) Applicant : **LUCAS INDUSTRIES PUBLIC LIMITED COMPANY**
**Brueton House, New Road**
**Solihull, West Midlands B91 3TX (GB)**

(72) Inventor : **Sakai, Izumi**
**16, Baxter Road, Shirley**
**Solihull, West Midlands, B90 2RU (GB)**

(74) Representative : **Robinson, John Stuart et al**
**Marks & Clerk Alpha Tower Suffolk Street Queensway**
**Birmingham, B1 1TT (GB)**

(54) **Speed sensor.**

(57) A speed sensor is provided having a spatial filter (2-4) responsive to energy received from an object, and movement imposing means (10) for imposing an additive speed U to the speed V between the object and the speed sensor. The speed sensor's output is a signal whose frequency is proportional to U+V. The frequency of the output can be compared with a reference frequency corresponding to zero relative speed so as to determine the direction of relative movement.

FIG.I.

EP 0 522 815 A1

The present invention relates to a speed sensor. Such a sensor may be used for measuring the relative speed, for instance between a vehicle and the ground.

A known type of speed over ground sensor responds to light reflected from the ground below a vehicle. Light from the ground is imaged onto an optoelectric spatial filter so that movement of the vehicle with respect to the ground causes an output signal whose frequency is proportional to movement. However, for relatively small speeds, the frequency of the output signal is low and it becomes difficult to separate the desired signal from low-frequency noise. Further, forward and reverse movement cannot be discriminated.

JP 61-283871 discloses an arrangement of this type in which the transducer is vibrated sinusoidally and its output signal is synchronously detected. This arrangement reduces the effects of low-frequency noise but cannot discriminate between forward and reverse movement.

It is possible to discriminate between forward and reverse movement by comparing the phase of output signals from two sets of spatial filter transducers arranged with the spatial filters in quadrature. However, such an arrangement does not reduce low-frequency noise and has a relatively slow response time. Further, two spatial filter transducers and phase detecting means are required so that this arrangement is more complex and expensive.

According to the invention, there is provided a speed sensor for sensing speed with respect to an object, comprising transducer means arranged to be sensitive to an image of a plurality of consecutive regions of the object, means for imposing a relative movement of substantially constant speed between the transducer means and the image, and frequency measuring means for measuring the frequency of an output signal of the transducer means.

In the case of speed over ground measurement, the object comprises the ground, for instance below a vehicle.

The transducer may be sensitive to ultrasonic energy, electromagnetic energy, or any other suitable form of energy received from the object, for instance by reflection, emission, or transmission. In the case of an electromagnetic transducer, the transducer may be sensitive to visible light and may, for instance, comprise an optoelectric sensor of the spatial filtering type.

The speed sensor may be arranged to measure rotary or translational speed. In the case of rotary speed, the movement imposing means may be arranged to provide rotary movement of substantially constant angular velocity and the transducer may be curved. For translational movement, the movement imposing means may be arranged to provide reciprocating movement and the transducer may be linear. For instance, the movement imposing means may be arranged to provide mechanical movement of a transducer, spatial filter, optical system, or some other part of the transducer means, for instance by an electric motor or piezo electric transducer. Alternatively, the movement imposing means may provide the relative movement by electronic means, such as by acousto-optical modulation, electro-optical modulation, a Bragg cell or image scanning, for example by using a liquid crystal device to form a moving slit. The reciprocating movement is preferably saw-tooth movement having a linear ramp and a relatively short reset or flyback period.

Alternatively, any waveform having a substantially linear portion may be used together with gating means for enabling the frequency measuring means during the substantially linear portion. Thus, sinusoidal and triangular waveforms may be used with suitable gating. For a triangular waveform, the rising and falling portions may be used to provide measurements of forward and reverse movement with equal resolution (for a symmetrical triangular waveform). Direction of movement is indicated by whether the rising or falling portion of the waveform produces the larger frequency, and the corresponding larger frequency is used to measure the speed.

The frequency of the output signal may be compared with a predetermined frequency which corresponds to the constant speed movement. If the frequency of the output signal is equal to the predetermined frequency, relative speed is zero. If the frequency is greater than the predetermined frequency, forward movement is indicated whereas, if the frequency is less than the predetermined frequency, reverse movement is indicated.

It is thus possible to provide a speed sensor which is capable of high resolution and in which the effects of low-frequency noise are substantially reduced. The response of the sensor is fast and forward and reverse movement can be discriminated without the need for substantial additional components, such as optical spatial filters.

The present invention will be further described, by way of example, with reference to the accompanying drawings, in which:

Figure 1 is a block schematic diagram of a speed sensor constituting an embodiment of the invention;

Figure 2 is a graph against time illustrating a waveform of the sensor of Figure 1;

Figure 3 is a graph of output frequency against speed for the sensor of Figure 1;

Figure 4 is a block schematic diagram of a speed sensor constituting another embodiment of the invention;

Figure 5 illustrates waveforms against time for the sensor of Figure 4; and

Figure 6 is a block schematic diagram of a speed sensor constituting a further embodiment of the invention.

Throughout the drawings, like reference numerals refer to like parts.

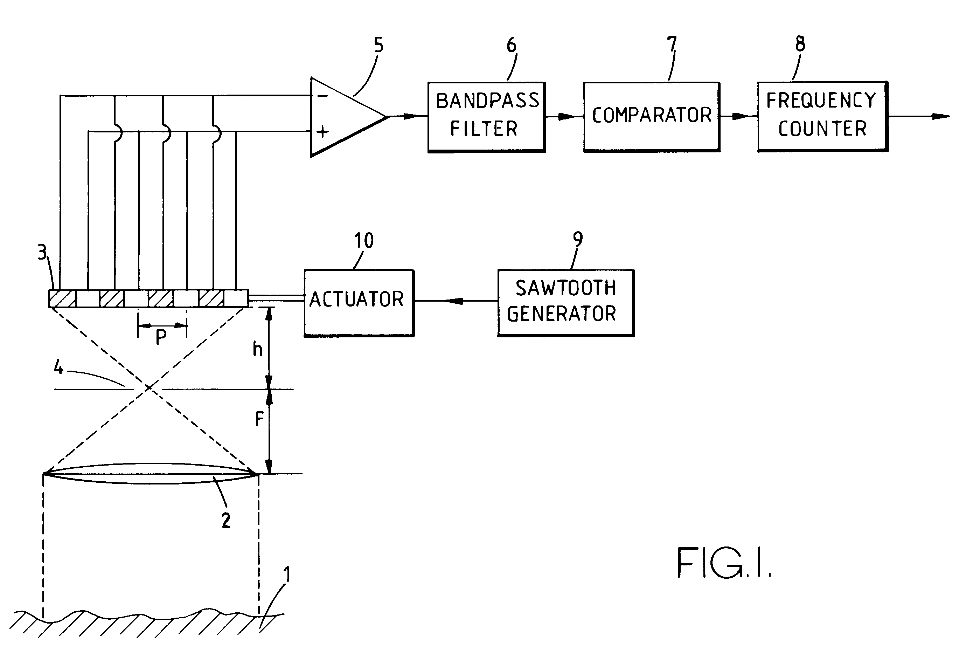

The speed sensor shown in Figure 1 is for use as a speed over ground sensor receiving reflected light from the ground 1 below a vehicle. An optical system 2 (shown diagrammatically as a converging lens) with a focal length F receives light from the ground 1 and images this onto a plurality of optoelectric transducers arranged as a spatial filter 3. A slit 4 is located at the prime focus of the optical system 2 and is spaced from the optical filter 3 by a distance h. A magnification factor $a = h/F$ is therefore applied to the image of the ground at the spatial filter 3.

A differential amplifier 5 has an inverting input which receives the sum of the outputs of odd photoelectric transducers whereas a non-inverting input receives the sum of the outputs of the even transducers. The output of the amplifier 5 is connected to the input of a bandpass filter 6, whose output is connected to the input of a comparator 7. The output of the comparator 7 is connected to the input of a frequency counter 8, whose output is the output of the speed sensor.

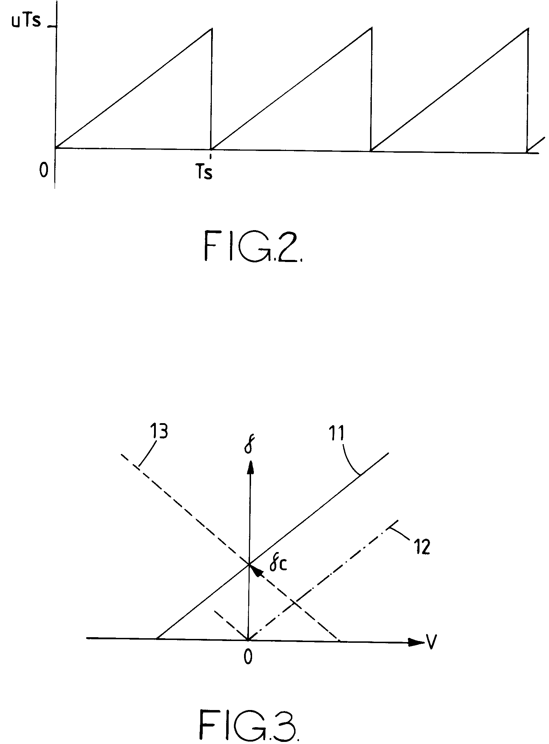

A saw-tooth generator 9 generates a saw-tooth waveform as shown in Figure 2. The waveform has a period Ts and a very short fly-back time. The saw-tooth ramp rises linearly from zero to uTs before resetting or flying back, where u is the speed of movement of the spatial filter 3. The output of the saw-tooth generator 9 is connected to an actuator 10, which is mechanically coupled to the spatial filter 3 so as to move the filter at the constant speed u and return it to a reset position during fly-back of the saw-tooth waveform.

The spatial filter 3 has a pitch P and, hence, a spatial frequency Fo of 1/P. When the vehicle is stationary with respect to the ground 1, the relative movement of the spatial filter 3 gives rise to an output signal of frequency $f_c = Fou$. For relative movement of speed v between the speed sensor and the ground 1, the output frequency becomes

$$f = Foav + f_c$$

Thus, where v is positive representing forward movement, the frequency of the output signal is greater than $f_c$ whereas, for negative values of v corresponding to reverse movement, the output signal frequency is less than $f_c$. Thus, the direction of movement can be determined by comparing the output signal frequency with $f_c$.

Compared with known types of speed sensors, the frequency of the output signal is thus shifted by an amount $f_c$ corresponding to the movement of the spatial filter 3. For very low speeds, the output signal frequency is in the vicinity of $f_c$, so that low speed measurement are not affected by low-frequency noise. For a road vehicle of the type in which the maximum speed in the reverse direction is much less than the maximum speed in the forward direction, the frequency $f_c$ may be chosen so that low-frequency noise does not become a problem at any speed of which the vehicle is capable in the reverse direction.

Figure 3 illustrates the transfer functions between output signal frequency and speed. The continuous line 11 is the transfer function of the speed sensor shown in Figure 1. For comparison, the chain dot curve 12 illustrates the transfer function for a known speed over ground sensor in which the spatial filter is fixed. Thus, compared with the known function 12, the transfer function 11 is displaced vertically so as to cross the frequency axis at $f_c$. Both functions are linear, with the known function 12 being symmetrical about the frequency axis. Thus, whereas the known type of sensor is plagued by low-frequency noise when measuring low speeds, the speed sensor of Figure 1 is substantially immune from this problem. Also, whereas the known sensor cannot discriminate between forward and reverse movement, the speed sensor of Figure 1 can discriminate between forward and reverse movement without any ambiguity so long as the reverse speed does not exceed the speed u at which the spatial filter 3 moves.

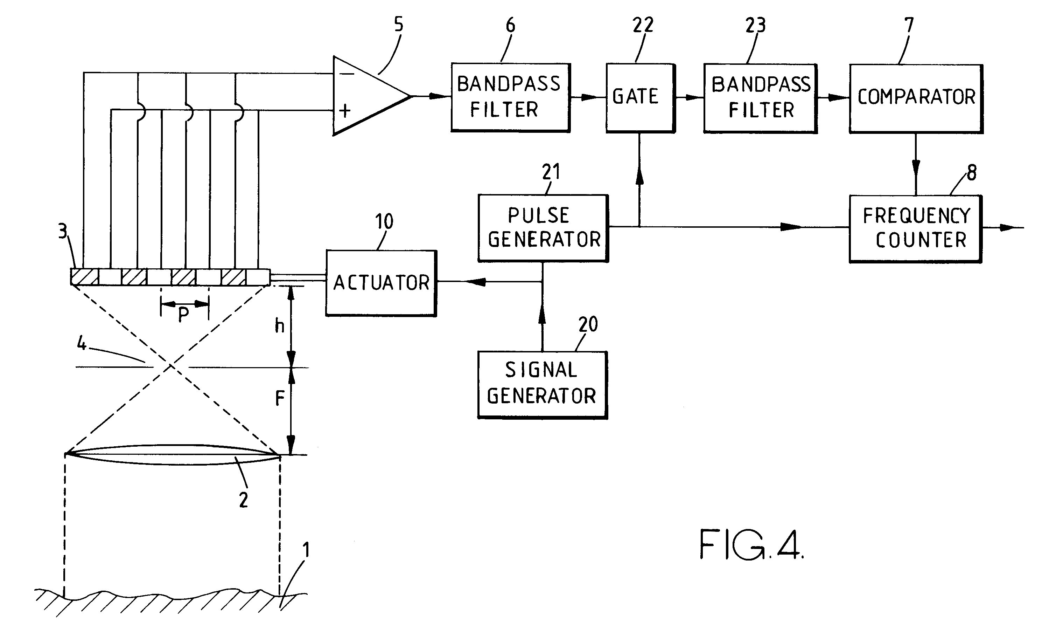

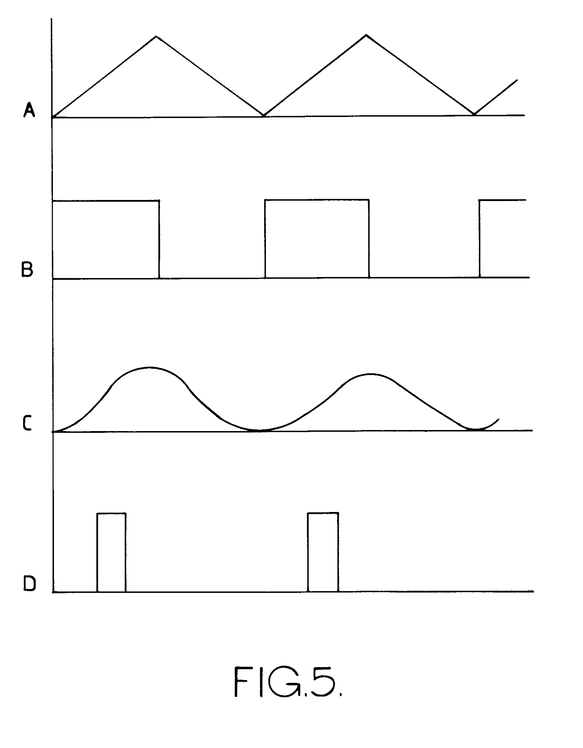

Figure 4 illustrates another speed sensor which represents a modification of the sensor of Figure 1. The saw-tooth generator 9 of Figure 1 is replaced by a signal generator 20 generating a different waveform, such as a triangular waveform (Figure 5A) or a sinusoidal waveform (Figure 5C). In the case of a practical electromechanical actuator 10, such as an electric motor or piezo electric transducer, because of the finite mass of the moving elements including the spatial filter 3, it may not be possible to achieve a sufficiently short fly-back time with a saw-tooth waveform to achieve a desired accuracy of speed measurement. Thus, the signal generator 20 generates a waveform which the actuator 10 can translate accurately into a corresponding movement of the spatial filter 3.

A pulse generator 21 is connected to the output of the signal generator 20 and supplies a pulse corresponding to a linear portion of the waveform produced by the signal generator 20. The pulse is supplied to the control input of a gate 22 whose input is connected to the output of the bandpass filter 6 and whose output is connected to the input of a bandpass filter 23 whose output is connected to the input of the comparator 7. Thus, the gate 22 and the filter 23 are inserted between the bandpass filter 6 and the comparator 7 of Figure 1. Further, the output of the pulse generator 21 is connected to an enable input of the frequency counter 8. The pulse generator 21 thus controls the time interval, for each cycle of the waveform generated by the generator 20, during which measurements are made by opening the gate 22, and enabling the frequency counter 8.

In the case of a triangle waveform as shown in Figure 5A, the pulse generator 21 generates the pulse during the rising portion of each cycle of the waveform. Such an arrangement may also be adopted for an imperfect saw-tooth waveform, which resembles a triangular waveform. In practice, because the falling part of the waveform is not used during speed measurement, the falling part need not be linear.

Figure 5C illustrates a sinusoidal waveform and Figure 5D indicates that the enabling pulses are produced approximately mid-way between the maximum and minimum peaks of the sinusoidal waveform. This portion of the waveform represents a reasonable approximation to the linear and may give acceptable measurement accuracy and resolution for some applications of the speed sensor. A sinusoidal waveform, and other similarly shaped waveforms of continuous slope, may be advantageous in avoiding impractically large accelerations and decelerations of the spatial filter 3.

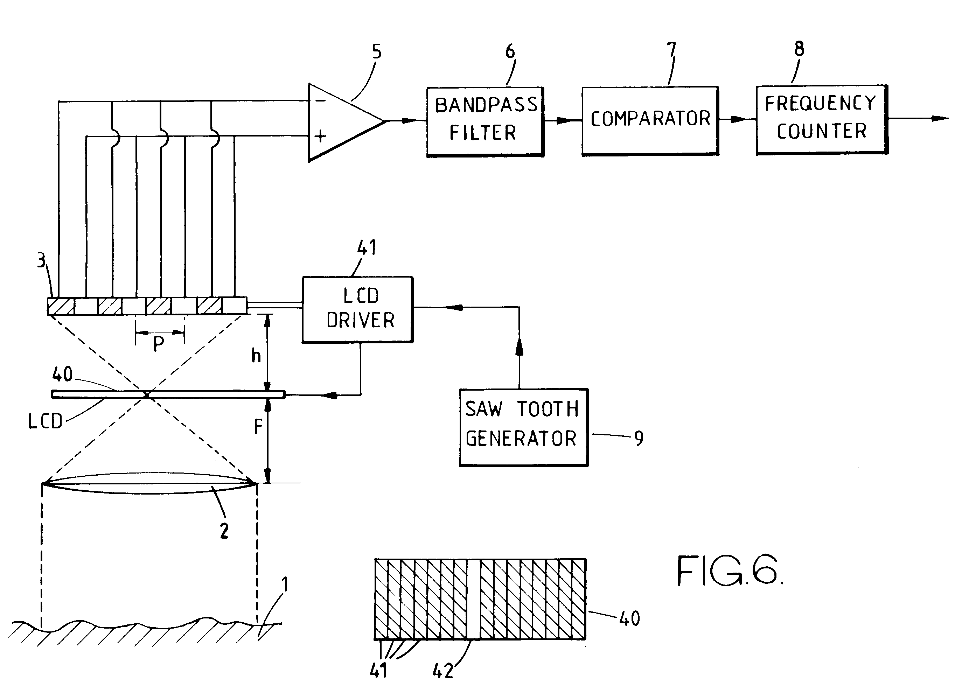

As shown in Figure 6, the spatial filter 3 may be kept static and the slit 4 moved. A liquid crystal device (LCD) 40 has a plurality of slit shaped regions 41. Each region is controllable so as to be either transparent or opaque. At any time, all except one of the regions 41 are opaque. The position of the transparent region 42 is moved sequentially from a first end of the device 40 to a second end of the device 40. Upon reaching the second end, transparent region is returned to the first end of the device 40. The transparent region 41 acts as the slit 4. In such an arrangement $f_c=(1+a)$Fou.

The device 40 is controlled by a LCD driver in response to a control waveform, for example a sawtooth from the sawtooth generator 9. It is thus possible to provide a slit position having a stepwise approximation to a sawtooth displacement with a rapid fly-back period.

Various modifications may be made within the scope of the invention. For instance, in addition to measuring speed during the rising portions of the waveforms illustrated in the drawings, similar measurements may be made during falling portions of the waveforms. In the case of the triangular waveform shown at Figure 5A, if the waveform is symmetrical with the same absolute value of slope of the falling portion as that of the rising portion, separate frequency measurements may be made during the rising and falling portions. The transfer function for the falling portion is illustrated in Figure 3 by a broken line 13. Such an arrangement is useful for providing forward and reverse speed measurements of equal or similar resolution, for instance for applications were maximum forward and reverse speeds may be similar. Such an arrangement retains the ability to discriminate between forward and reverse motion, for instance determined by whether the rising or falling portion of the waveform gives rise to the higher frequency output signal.

It is thus possible to provide a speed sensor which substantially eliminates the problem of low-frequency noise for low speed measurement while providing discrimination between forward and reverse movement without the need for significant additional components, such as an additional optical filter. The speed sensor may be used for any application requiring the measurement of relative speed between the sensor and a reflective, transmissive, or emissive object, and is capable of measuring rotary as well as translational speed.

## Claims

1. A speed sensor for sensing speed with respect to an object, comprising transducer means (4) arranged to be sensitive to an image of a plurality of consecutive regions of the object, and frequency measuring means (8) for measuring the frequency of an output signal of the transducer means, characterised by means (10) for imposing a relative movement of substantially constant speed between the transducer means and the image.

2. A speed sensor as claimed in claim 1, characterised in that the movement imposing means (10) is arranged to produce reciprocating movement.

3. A speed sensor as claimed in claim 2, characterised in that the reciprocating movement is a sawtooth function of time.

4. A speed sensor as claimed in claim 2, characterised in that the reciprocating movement has a substantially linear portion, and further comprising gating means (22) for enabling the frequency measuring means (8) to measure frequency during the substantially linear portion.

5. A speed sensor as claimed in claim 4, characterised in that the reciprocating movement is a sinusoidal function of time.

6. A speed sensor as claimed in claim 4, characterised in that the reciprocating movement is a triangular function of time.

7. A speed sensor as claimed in any one of claims 4 to 6, characterised in that the gating means (22) is arranged to enable the frequency measuring means (8) during the substantially linear portions of the relative movement occurring in first and second opposite directions.

8. A speed sensor as claimed in any one of the preceding claims, characterised in that the relative movement is linear and the transducer means (4) is linear.

9. A speed sensor as claimed in any one of claims 1 to 7, characterised in that the relative movement is rotary and the transducer means (4) is curved.

10. A speed sensor as claimed in any one of the preceding claims, characterised in that the movement imposing means is an actuator (10) arranged to move a part (2, 3, 4) of the transducer means (2-4).

11. A speed sensor as claimed in any one of claims 1 to 9, characterised in that the movement imposing means is arranged to scan an image of the object over transducers (4) of the transducer means (2-4).

12. A speed sensor as claimed in claim 11, characterised in that the image imposing means includes a liquid crystal device (40).

13. A speed sensor as claimed in any one of the preceding claims, characterised in that the transducer means (2-4) is sensitive to electromagnetic radiation.

14. A speed sensor as claimed in claim 13, characterised in that the transducer means (2-4) is sensitive to light.

15. A speed sensor as claimed in any one of claims 1 to 11, characterised in that the transducer means (2-4) is sensitive to ultra-sound.

16. A speed sensor as claimed in any one of the preceding claims, characterised in that the transducer means (2-4) comprises a one dimensional array of transducers divided into first and second groups with alternate transducers belonging to different groups, and characterised by difference forming means (5) for forming a difference between a sum of outputs of the transducers of the first group and a sum of the outputs of the transducers of the second group.

17. A speed sensor as claimed in any one of the preceding claims, characterised in that the frequency of the output signal is compared with a reference to determine the direction of relative movement between the sensor and the object.

FIG.I.

FIG.2.

FIG.3.

FIG.4.

EP 0 522 815 A1

FIG.5.

FIG.6.

EP 0 522 815 A1

**European Patent Office**

## EUROPEAN SEARCH REPORT

Application Number

EP 92 30 6191

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN vol. 8, no. 257 (P-316)(1694) 24 November 1984 & JP-A-59 128 449 ( MITSUBISHI ) 24 July 1984 * abstract * | 1-3,10, 13,14 | G01P3/36 G01S17/58 |
| X | US-A-3 856 401 (HEITMANN ET AL) * abstract; figures 1,3 * | 1,2,8, 10,13,14 | |
| X | APPLIED PHYSICS B. PHOTOPHYSICS AND CHEMISTRY vol. B43, no. 4, August 1987, HEIDELBERG DE pages 209 - 224 AIZU ET AL 'Principles and Development of Spatial Filtering Velocimetry' * page 217, paragraph 1.5; figures 10,11 * * page 219, right column, line 44 - page 221, right column, line 20 * | 1,8,9, 12-14 | |
| X | ELEKTRONIK vol. 38, no. 7, 31 March 1989, MUNCHEN DE pages 46 - 51 , XP186126 KÖBBING 'Völlig autonome Flurförderzeuge' * page 47, right column, line 24 - page 48, left column, line 27; figure 2 * | 1,9,10, 13,14 | TECHNICAL FIELDS SEARCHED (Int. Cl.5) G01S G01P |

The present search report has been drawn up for all claims

| Place of search | Date of completion of the search | Examiner |
|---|---|---|
| THE HAGUE | 20 OCTOBER 1992 | JONSSON P.O. |